## Europäisches Patentamt

## European Patent Office

## Office européen des brevets

(11) Veröffentlichungsnummer: **0 223 768**
A2

(12) # EUROPÄISCHE PATENTANMELDUNG

(21) Anmeldenummer: 86890304.8

(51) Int. Cl.⁴: **B 29 C 65/42**

(22) Anmeldetag: 06.11.86

(30) Priorität: 13.11.85 AT 3303/85

(43) Veröffentlichungstag der Anmeldung: 27.05.87
Patentblatt 87/22

(84) Benannte Vertragsstaaten: **BE CH DE ES FR GB GR IT LI LU NL SE**

(71) Anmelder: **S.E.A. Studiengesellschaft für Energiespeicher und Antriebssysteme Gesellschaft m.b.H., Bleckmanngasse 10 Postfach 49, A-8680 Mürzzuschlag (AT)**

(72) Erfinder: **Tomazic, Gerd, Dipl.-Ing. Dr., Hofkirchergasse 4, A-8680 Mürzzuschlag (AT)**

(74) Vertreter: **Widtmann, Georg, Dr., S.E.A. Studiengesellschaft für Energiespeicher und Antriebssysteme Gesellschaft m.b.H. Schellinggasse 7/5, A-1010 Wien (AT)**

(54) Vorrichtung zum stoffschlüssigen Verbinden von zumindest im Bereich der Verbindungsstellen thermoplastischen Kunststoff aufweisenden Teilen.

(57) Vorrichtung zum materialschlüssigen Verbinden von zumindest im Bereich von Verbindungsflächen (71) thermoplastischen Kunststoff aufweisenden Teilen (72, 73) mit mindestens einer über diesen Bereich führbaren Zuführung (5, 51, 3) für plastifizierten Kunststoff an die Verbindungsflächen und zumindest einer dieser Zuführung voraneilend führbaren Einrichtung (2) zum plastifizierten Erhitzen der Verbindungsflächen, wobei die Vorrichtung (100) mindestens einen der Zuführung (5, 51) voraneilend, der Querschnitts-Gestalt der Verbindungsfläche(n) (71) entsprechende Querschnitts-Gestalt aufweisende, der bzw. den Verbindungsstelle(n) zumindest in anliegendem Kontakt entlang führbare, erhitzbare Kontaktfläche(n) (20) aufweisenden Anschmelzkörper (2) mit mindestens einer im Abstand von dessen Vorderseite quer zur Bewegungsrichtung (r) der Vorrichtung (100) sich erstreckenden, die Kontaktfläche(n) (20) durchdringenden, mit der Zuführung (5, 51) für den plastifizierten Kunststoff in Verbindung stehenden Öffnung (3) für die Zufuhr des Kunststoffes an die Verbindungsfläche(n) (71) und dieser nacheilend, führbar mindestens einen der Querschnitts-Gestalt der Verbindungsfläche(n) (71) entsprechende Querschnitts-Gestalt aufweisende, erhitzbare Kontaktfläche(n) (40) aufweisenden Nachwärmkörper (4) aufweist, welchem vorzugsweise ein Organ (6) zum Nachbearbeiten der Schweißstelle nachgeordnet ist.

ACTORUM AG

Vorrichtung zum stoffschlüssigen Verbinden von
zumindest im Bereich der Verbindungsstellen thermoplastischen Kunststoff aufweisenden Teilen

Die Erfindung betrifft eine Vorrichtung zum materialschlüssigen Verbinden von zumindest im Bereich von Verbindungsflächen bzw. -stellen thermoplastischen Kunststoff, beispielsweise Polyolefin, aufweisenden Teilen.

Es sind seit langem Techniken zum Verbinden derartiger,
häufig voll aus Kunststoff gebildeter Teile mittels Klebung oder Schweißung bekannt. Für verschiedene Anwendungen
haben die kostengünstig herstell- und verarbeitbaren
Polyvinylhalogenide große Bedeutung erlangt, die sowohl
klebendem als auch schweißendem Fügen zugänglich sind.
Infolge der Tendenz, halogenhältige Kunststoffe zurückzudrängen, gewinnen z. B. Thermoplaste ohne hochreaktive Bestandteile an Bedeutung. Thermoplastische Polyolefine
ohne wesentlich reaktive Gruppen erschweren den Einsatz
von Klebern, welche eine chemische Bindung zur Voraussetzung haben, ergeblich bzw. machen einen solchen unmöglich. Für diese Gruppe von Kunststoffen wurden verschiedene Schweißverfahren entwickelt, von denen z. B.
Ultraschallschweißen für Polyolefin-Folien oder das relativ aufwendige Vibrations- und Reibschweißen genannt
seien. Bekannte Standardverfahren für artgleiches Verbinden von Kunststoff-Teilen sind das Spiegel- bzw. Heizelement-Schweißen und das Heißluft-Schweißen. Nachteile
des Spiegelschweißens, bei dem die miteinander zu verbindenden Teile an den Verbindungsflächen direkt mittels
anliegend gehaltenem, erhitztem Material erwärmt und nach
dessen Entfernung unter Ausbildung des Materialschlusses
gegeneinander gedrückt werden, was relativ hohe Schweißstellengüte erbringt, da der Zutritt von Luft an die Verbindungsstelle in warmem Zustand nur kurze Zeit erfolgt, bestehen vor allem darin, daß es auf relativ kleine Bereiche beschränkt und diskontinuierlich ist, der Verbindungsspalt vor dem Schweißen dimensionsmäßig zu berücksichtigen ist, und die Schweißelemente sowie deren Wartung aufwendig sind. Beim Heißluft-Schweißen hingegen werden mittels direktem Heißluft-Strom die zu verschweißenden Flächen so vorplastifiziert, daß sie, gegebenenfalls unter Zuführung von plastifiziertem Kunststoff als Schweißzusatz, materialschlüssig verschmolzen werden können. Das Erhitzen mit strömender Heißluft bewirkt starke Oxydation zumindest der Oberflächen der Verbindungsstellen und damit z. B. Degradation des Kunststoffes, wodurch die mechanische und die Zeitstandsfestigkeit der Verbindung erheblich vermindert werden können. Neben diesem Nachteil besteht auch die Schwierigkeit, mit dem extrudierten, plastifizierten Kunststoffmaterial auf die jeweils zu verschweißende Fläche bzw. Stelle genügend Druck auszuüben, es erfolgt dann z. B. bei Anfertigung einer V-Naht ein Austreten des Extrudates seitlich an deren Rändern sowie an der Wurzel und der zur Erzielung einer einwandfreien Materialschluß-Verbindung nötige Druck ist nicht erreichbar.

Aufgabe der vorliegenden Erfindung ist es, eine Vorrichtung der eingangs erwähnten Art zu schaffen, bei welcher die Nachteile der bekannten Fügeverfahren vermieden sind, ein Zutritt von Luft bzw. Sauerstoff beim Plastifizieren der Verbindungsflächen bzw. -stellen der Teile weitgehend vermindert bzw. ausgeschlossen wird und durch Anwendung von Druck ein besonders guter Materialschluß mit hoher Reproduzierbarkeit erzielbar ist. Außerdem soll die Vorrichtung hohe Flexibilität und auf das jeweilige Fügeproblem orientierte Anpaßbarkeit an die Art und Oberflächengestalt der Verbindungsstellen bzw. der zu verbindenden Teile, auf deren Material u. dgl. sowie gute Handhabbarkeit aufweisen.

Gegenstand der Erfindung ist eine Vorrichtung zum materialschlüssigen Verbinden von zumindest im Bereich der Verbindungsstellen thermoplastischen Kunststoff, beispielsweise Polyolefin, aufweisenden Teilen mit mindestens einer über diesen Bereich führbaren, bevorzugt mengenregelbaren Zuführung für plastifizierten Kunststoff an die Verbindungsflächen bzw. -stellen und zumindest einer dieser Zuführung, bevorzugt synchron, zumindest voraneilend führbaren Einrichtung zum plastifizierenden Erhitzen der Verbindungsflächen bzw. -stellen der Teile, die im wesentlichen darin besteht, daß die, beispielsweise handgerätartig ausgebildete, Vorrichtung mindestens einer der, vorzugsweise mittels Extruder, mit, bevorzugt artgleichem, plastifiziertem Kunststoff versorgbaren Zuführung voraneilend, der Querschnittsgestalt der Verbindungsfläche(n) bzw. -stelle(n) im wesentlichen entsprechende Querschnittsgestalt aufweisende, der bzw. den Verbindungsstelle(n) bzw. -fläche(n) zumindest in anliegendem Kontakt entlang führbare, vorzugsweise temperatureinstellbar, erhitzbare Kontaktfläche(n) aufweisenden Anschmelzkörper mit mindestens einer im Abstand von dessen Vorderseite im wesentlichen quer zur Bewegungsrichtung der Vorrichtung sich erstreckenden, die Kontaktfläche(n) durchdringenden, vorzugsweise schlitzartigen, mit einer Zuführung für den plastifizierten Kunststoff in fluiddichter Verbindung stehenden Öffnung für die Zufuhr des plastifizierten Kunststoffes an die Verbindungsfläche(n) bzw. -stelle(n) und dieser, vorzugsweise synchron, nacheilend, insbesondere mit Kraftbeaufschlagung des auf den Verbindungsfläche(n) bzw. -stelle(n) abgelegten Kunststoffes führbar mindestens einen, ebenfalls im wesentlichen der Querschnittsgestalt der Verbindungsfläche(n) bzw. -stelle(n) entsprechende Querschnittsgestalt aufweisende, vorzugsweise temperatureinstellbar, erhitzbare Kontaktfläche(n) aufweisenden Nachwärm- bzw. Diffusionskörper aufweist, welchem vorzugsweise ein Organ zum im wesentlichen kraftbeaufschlagbaren Nachbearbeiten der Schweißstelle nachgeordnet ist.

Vorteil der neuen Vorrichtung ist, daß das Erwärmen und Aufschmelzen der zum Verbinden vorgesehenen Flächen bzw. Stellen der Teile, also z. B. die Flanken einer V-Nahtausnehmung durch unmittelbaren Kontakt mit dem Außenmantel des Anschmelzkörpers in gewünschter Schichtdicke erfolgt, wobei ein Luftzutritt an diese erwähnten bzw. aufgeschmolzenen Stellen nicht mehr möglich ist. Der Anschmelzkörper dringt bis zu gewisser Schichtdicke in den Kunststoff der Verbindungsstellen ein. Mit einer Temperatursteuerung kann gleichmäßige und genaue Einstellung der pro Zeiteinheit einzubringenden Energie erfolgen. Durch das dabei aufgeschmolzene Kunststoffgut erfolgt die Abdichtung gegen den Luftzutritt und weiters auch die Verhinderung eines Eindringens des an die Verbindungsstellen geförderten Extrudates in Vorschubrichtung sowie eines Austrittes aus der Wurzellage bzw. an den Rändern der Schweißung. Der zur Nahtfüllung bzw. Aufschweißlage zugeführte plastifizierte Kunststoff wird aus der schlitzdüsenartigen Öffnung durch den Extruderdruck an die voraufgewärte(n) Verbindungsfläche(n) der Teile gedrückt, wobei infolge des laufenden Vorschubs der Vorrichtung zwischen den Kontaktflächen des dem Zufuhrschlitz folgenden Nachwärmkörpers und den Flächen der Verbindungsstellen je nach ausgeübtem Druck das Extrudat ein breites oder schmales Band ausbildet, womit ein Gegendruck zur Druckbeaufschlagung, die mit der Extruderförderung erfolgt, erreicht wird. Rückseitig des die Ineinanderdiffusion von Schweißzusatz- und Verbindungsstellen fördernden Diffusionskörpers tritt der zugeführte Kunststoff aus und füllt, wie sich zeigte, jeweils in gewünschter Weise die Ausnehmung einer Schweißnaht oder dgl. auf. Um der Schweißnaht ein sauberes Aussehen zu verleihen, ist das mitgeführte Glätt- bzw. Nachbearbeitorgan vorgesehen, durch das außerdem während des Abkühlens der frischen Schweißung auf diese ebenfalls Druck ausgeübt wird. Vorteilhaft ist,

um ein seitliches Ausdringen bzw. Austreten des plastifizierten Schweißgutes zu verhindern, die Zufuröffnung für den Kunststoff so gestaltet, daß ihre Ränder im Abstand von den Rändern der mit der Schweißung zu versehenden Stellen bzw. Flächen angeordnet sind, also z. B. unterhalb der Seitenkanten einer V-Naht enden. Mit der erfindungsgemäßen Vorrichtung werden hochfeste Schweißungen, insbesondere Schweißnähte erzielt, die weit über den üblichen Anforderungen an Kunststoff-Schweißungen liegen, sodaß Stahlschweißungen ähnliche Qualität aufweisende Verbindung erzielt wird. Bevorzugt sind Anschmelz- und/oder Nachwärmkörper zumindest teilweise hohl ausgebildet, was das Gewicht reduziert und die Unterbringung von Heizorganen u. dgl. wesentliche erleichtert. Das neue Gerät eignet sich auch für bedeckende Schweißungen, wobei dann die Kontaktfläche des Anschmelzkörpers und die Schlitzöffnung eben ausgebildet sind.

Wenn gemäß einer bevorzugten Variante das in Vorschubrichtung weisende, vordere Ende des Aufschmelzkörpers im wesentlichen abgerundet ausgebildet ist, kann eine besonders gute Führung des Gerätes erreicht werden.

Wenn in vorteilhafter Weise der Nachwärm- bzw. Diffusionskörper am gegen die Vorschubrichtung weisenden rückseitigen Ende im wesentlichen abgerundet ausgebildet ist, ist ein besonders gutes Auffüllen der Schweißstelle bzw. Schweißnaht-Ausnehmung ohne Auftreten von Lunkern oder dgl. ermöglicht.

Besonders gute Möglichkeit des Reinigens der Vorrichtung sowie auch eines Auswechselns zur Anpassung an unterschiedliche Schweißprobleme ist gegeben, wenn günstigerweise vorgesehen ist, daß der Nachwärm- bzw. Diffusionskörper mit dem Anschmelzkörper, bevorzugt mit Bildung der, vorzugsweise schlitzartigen, Zufuhröffnung für plastifizierten
Kunststoff, zumindest indirekt lösbar verbunden ist, also
z. B. über ihre Gehäuse, lösbar verbunden ist.

Der Effekt der erleichterten Reinigung und Auswechselbarkeit wird noch erhöht, wenn bevorzugterweise der Nachwärm- bwz. Diffusionskörper die, vorzugsweise schlitzartige, Zufuhröffnung für plastifizierten Kunststoff aufweist, die in diesem Fall als eine an das rückseitige
Ende des Anschmelzkörpers anschließende Ausnehmung des
Aufwärmkörpers ausgebildet sein kann.

Gemäß einer weiteren vorteilhaften Ausführungsform kann
vorgesehen sein, daß der dem Nachwärm- bzw. Diffusionskörper zugekehrte, rückseitige Rand der Zufuhröffnung
für plastifizierten Kunststoff im wesentlichen gerundet
ausgebildet ist, wodurch ein "Schoppen" bzw. ein Quellen
des Kunststoffes in unerwünschte Richtung vermieden und
ein Verbinden des unter dem Diffusionskörper sich bildenden Kunststoff-Films auf die zu verschweißenden Verbindungsstellen bzw. -flächen mit sich steigerndem Druck
erreicht wird.

Besonders gute Regelbarkeit der an die Verbindungsstellen
zu bringenden Heizleistung, die gegebenenfalls in Abhängigkeit von der Vorschubgeschwindigkeit steuerbar sein kann,
läßt sich erreichen, wenn die Kontaktflächen des Anschmelzkörpers und/oder Nachwärm- bzw. Diffusionskörpers mit
elektrischer Heizeinrichtung erhitzbar sind.

Eine besonders feste Verbindung von Schweißzusatz-Werkstoff
und zu verbindenden Teilen kann erreicht werden, wenn mit
dem Anschmelzkörper - und zumindest mit diesem - eine Vergrößerung der Verbindungsflächen, z. B. durch Anbringung eines Wellen- oder Zahnprofils ausgebildet wird, wodurch eine Walkung und Durchmischung der Materialien und eine Art Verzahnung erfolgt, die noch höhere Verschweißungsgüte gewährleistet. Mit einem Nachwärmkörper mit einer derartigen welligen Ausbildung kann der Effekt dadurch, daß dort mehr Druck herrscht, noch verstärkt werden. Dementsprechend ist es bevorzugt, wenn die Kontaktfläche(n) des Anschmelzkörpers und/oder des Nachwärm- bzw. Diffusionskörpers mit im wesentlichen in Vorschubrichtung, vorzugsweise mit zu ihr parallel sich erstreckenden Erhebungen und/oder Vertiefungen, vorzugsweise mit etwa wellenartiger Kontur, gebildet ist bzw. sind.

Eine besonders sichere Verschweißung, welche noch gesteigerten Materialschluß zwischen Verbindungsstellen und Schweißstellen-Kunststoff gewährleistet, kann erreicht werden, mit einer vorteilhaften Ausführungsform, die vorsieht, daß die Erhebungen und/oder Vertiefungen der Kontaktfläche(n) des Anschmelzkörpers und des Nachwärm- bzw. Diffusionskörpers quer zur Vorschubrichtung gegeneinander verschoben angeordnet sind. Es erfolgt auf diese Weise sozusagen beim Vorschieben der Vorrichtung ein Verschieben vorher gebildeter Erhebungen im plastischen Kunststoff mittels der nachfolgenden Erhebungen der Kontaktfläche, also etwa ein Überschlagen bestimmter Bereiche der Verbindungsstellen mit eigenem Kunststoff-Material und damit besonders inniger Verbund von Teilen und Schweißgut.

Dieser Effekt ist besonder ausgeprägt erreichbar, wenn die Erhebungen der Kontaktfläche(n) des Anschmelzkörpers jeweils mit Vertiefungen der Kontaktfläche(n) des Nachwärm- bzw. Diffusionskörpers - bzw. umgekehrt - fluchtend ausgebildet sind.

Um ein schichtartiges Einbringen des Schweißzusatz-Materials unter gewünschtem Druck an die Verbindungsstellen unter dem Diffusionskörper zu erleichtern, kann es weiters vorteilhaft sein, wenn die Kontaktfläche(n) des Nachwärm- bzw. Diffusionskörpers gegenüber jener bzw. jenen des Anschmelzkörpers abgesetzt sind. Dadurch kann die Unterseite des Gerätes parallel zur Vorschubrichtung gehalten werden, wobei gleichmäßig über den dann freigehaltenen Querschnittsraum zwischen Außenfläche des Diffusionskörpers und den Verbindungsflächen der zugeführte plastifizierte Schweißzusatz-Kunststoff eindringen kann, um die Nahtausnehmung zu füllen. Zur Nachbearbeitung bzw. zum Säubern der Schweißstelle ist im einfachsten Fall eine gleichzeitige Druckausübung auf die frische Schweißstelle bewirkende, vorzugsweise zumindest deren volle Breite deckende Glättlippe vorteilhaft vorgesehen.

Anhand der Zeichnung wird die Erfindung näher erläutert.

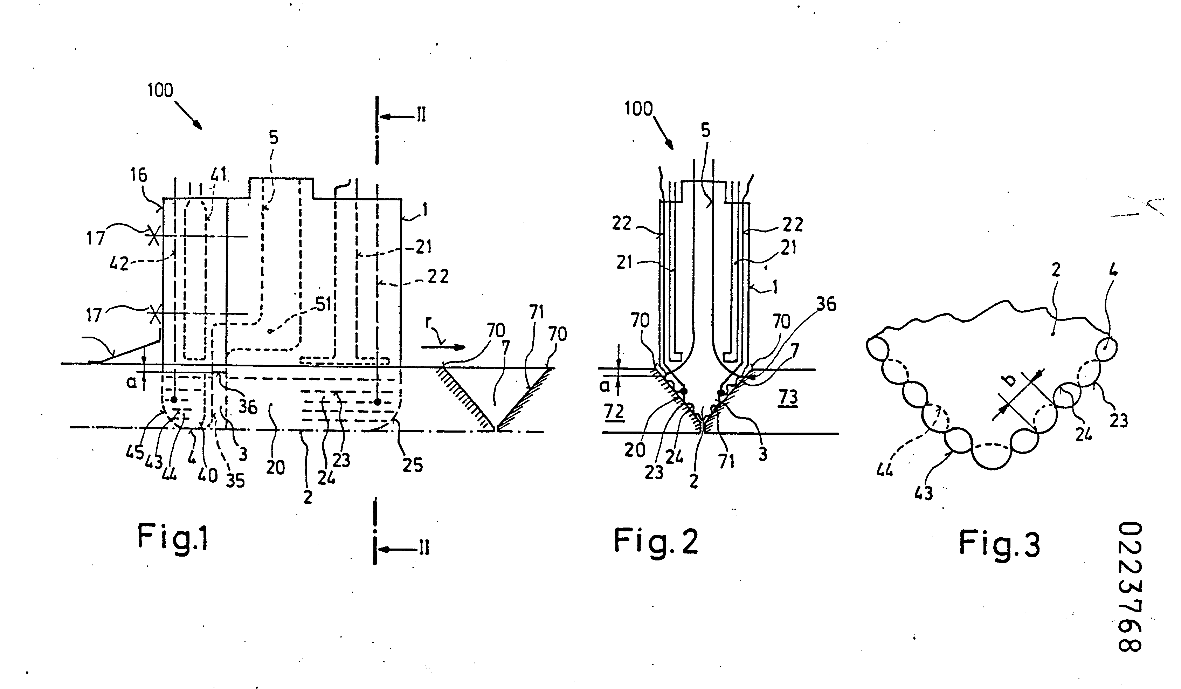

Die Fig. 1 zeigt schematisch eine erfindungsgemäße Vorrichtung zum Verbinden von Kunststoff-Teilen von der Seite, Fig. 2 den Querschnitt durch eine solche entlang der in Fig. 1 gezeigten Ebene II-II und Fig. 3 ein Schema der Kontaktflächen in Querschnitts-Ansicht, wobei die Erhebungen von Aufschmelz- und Nachwärmkörper gegeneinander verschoben angeordnet sind.

Fig. 1 zeigt in Seitenansicht eine erfindungsgemäße Vorrichtung (100) mit einem vorzugsweise mit Wärmedämm-Wand umgebenen, einen von einem nicht gezeigten Extruder mit plastifiziertem Kunststoff versorgbaren Zuführkanal (5) aufweisenden Gehäuse (1),dessen unterer Teil einen etwa gleitschuhartigen, etwa der Querschnitts-Gestalt der Verbindungsstelle von zu verbindenden Teilen, hier einer V-Nahtausnehmung (7), entsprechenden Querschnitt aufweisenden Anschmelzkörper (2) mit Kontaktfläche (20) aufweist, dem sich entgegen der Vorschubrichtung (r) eine etwa schlitzartige Zuführöffnung (3) anschließt, deren schmalseitige Ränder (36) im Abstand (a) von den Rändern (70) der Ausnehmung (7) vorgesehen sind und welche über einen, hier kurzen, Zwischenkanal (51) mit dem schon genannten Zufuhrkanal (5) in Verbindung steht. An die Zuführöffnung (3) schließt sich entgegen der Vorschubrichtung (r), mit dem Gehäuse (1) verbunden und im wesentlichen der Form des Anschmelzkörpers zumindest im der Querschnitts-Gestalt entsprechend, ein Kontaktfläche(n) (40) aufweisender Nachwärm- bzw. Diffusionskörper (4) an, welcher mit Verbindungselementen (17), hier über ein eigenes Anschlußgehäuse (16), mit dem Gehäuse (1) des Anschmelzkörpers (2) lösbar verbunden ist. Im Gehäuse (1) befinden sich zwei Temperatursensoren (22), z. B. Thermoelemente, sowie zumindest zwei Heizorgane (21) mit Zufuhr für Energie oder gegebenenfalls ein Heizmedium zur Erhitzung der Kontaktflächen (20) des Anschmelzkörpers (2), wobei mittels des Temperatursensors (22) über ein nicht gezeigtes Steuerorgan die Energiezufuhr regulierbar ist. Der über den Zwischenkanal (51) durch die Zuführöffnung (3) geführte Kunststoff wird beim Betrieb der Vorrichtung (100) beim Vorschub entlang den Kontaktflächen (40) des Nachwärm- bzw. Diffusionskörpers (4) und zwischen diesen und den Verbindungsflächen (71) der Nahtausnehmung (7) etwa schichtartig in die der Vorschubrichtung (r) entgegengesetzten Richtung gepreßt, quillt an der Rückseite des Nachwärm- bzw. Diffusionskörpers (4) aus, und füllt dort die V-förmige Nahtausnehmung (7) unter hochmaterialschlüssiger Verbindung mit ihren beiden Flankenflächen (71), wobei danach bei weiterem Vorschub der Vorrichtung (100) in Richtung (r) eine auf das frisch ausgequollene Extrudat am Anschlußgehäuse (16) des Nachwärm- bzw. Diffusionskörpers (4) aus, bevorzugt lösbar, angeordnete Glättlippe (6) eine Versäuberung der Naht und gleichzeitige Druckbeaufschlagung zur Erreichung des hochfesten Materialschlusses besorgt. Die Kontaktfläche (40) des Nachwärm- bzw. Diffusionskörpers (4) ist ebenfalls über ein mittels Temperatursensor (42) steuerbares Heizorgan (41), das hier im Anschlußgehäuse (16) angeordnet ist, erhitzbar. Die Kontaktflächen (20, 40) des Anschmelzkörpers (2) und des Nächwärm- bzw. Diffusionskörpers (4) weisen Längserhebungen (23, 43) und -vertiefungen (24, 44) nach Art einer Wellung zur Erhöhung des Materialschlusses auf. Die Vorderseite (25) des Anschmelzkörpers (2) kann etwa schiffsbugartig ausgebildet sein, die Rückseite (45) des Nachwärm- bzw. Diffusionskörpers (4) ebenfalls. Gerundet kann weiters, um die Verteilung des Schweißzusatz-Kunststoffes zu vergleichmäßigen, der rückseitige Rand (35) der Zuführöffnung (3) sein.

Aus der in Fig. 2 gezeigten Querschnitts-Ansicht der Vorrichtung (100) entlang der Ebene II-II der in Fig. 1 ist ersichtlich, wie beidseitig über den Kontaktflächen (20) des Anschmelzkörpers (2) mit Längserhebungen (23) und Längsvertiefungen (24), wobei die Kontaktfläche (20) im wesentlichen der Form der Nahtausnehmung (7) mit den Flankenflächen (71) für das Schweißgut entsprechend geformt sind, im Gehäuse (1) zwei Heizorgane (21) sowie zwei Thermoelemente (22) angeordnet sind, und wie der Zuführkanal (5) für die Zuführung plastifizierten Kunststoffes in die in unterbrochener Linie angedeutete schlitzförmige Zuführöffnung (3), deren seitliche Ränder (36), im Abstand (a) unterhalb der Ränder (70) der V-Nahtausnehmung (7) zwischen den Kunststoff-Teilen (72, 73) liegen, sich verbreiternd übergeht.

Aus dem in Fig. 3 gezeigten Schema ist ersichtlich, wie die Oberfläche des Anschmelzkörpers wellige Längserhebungen (23) und -vertiefungen (24) aufweist, welche eine Verzahnung von Kunststoff und Schweißgut wesentlich verbessern, und in strichlierter Linie ist gezeigt, wie sich, im wesentlichen mit diesen Längserhebungen (23) und -vertiefungen (24) des Anschmelzkörpers fluchtend, jeweils um eine Erhebungsbreite (b) verschoben, die Längsvertiefungen (43) und -erhebungen (44) des Nachwärm- bzw. Diffusionskörpers (4) befinden, wodurch ein besonders gutes Durchmischen des Materiales an der Verbindungsstelle beim
Vorschub der Schweißvorrichtung erfolgt, womit der Materialschluß praktisch in der Stahlbranche übliche Qualität
erhält.

- 12 -

Patentansprüche :

1. Vorrichtung zum materialschlüssigen Verbinden von im Bereich von Verbindungsflächen thermoplastischen Kunststoff, z. B. Polyolefin, aufweisende Teile mit einer über diesen Bereich führbaren Zuführung für plastifizierten Kunststoff, einem dieser voraneilenden Anschmelzkörper, der im wesentlichen der Querschnittsgestalt des Bereiches der Verbindungsflächen, z. B. Nahtausnehmung, aufweist, welcher im anliegenden Kontakt mit Kontaktflächen entlang der Verbindungsflächen führbar ist und einem der Zuführung nacheilenden, heizbaren Nachwärmkörper, insbesondere zum Glätten der Schweißnaht, dadurch gekennzeichnet, daß die Form des heizbaren, insbesondere temperatureinstellbaren, Nachwärm- bzw. Diffusionsköpers (4) mit Kontaktflächen (40) im wesentlichen der Querschnittsgestalt des Bereiches der Verbindungsflächen, z. B. Nahtausnehmung (7), entspricht und die Kontaktfläche(n) (20, 40) des heizbaren, insbesondere temperatureinstellbaren,Anschmelzkörpers (4) zumindest eine im wesentlichen quer zur Bewegungsrichtung (r) sich erstreckende Zuführöffnung(3) für den plastifizierten Kunststoff im Abstand von dessen Vorderseite (25) aufweist, in welcher ein Zuführkanal (5), welcher vorzugsweise mit einem Extruder fluiddicht verbunden ist, mündet.

2. Vorrichtung nach Anspruch 1, dadurch gekennzeichnet, daß der Anschmelzkörper (2) an seiner Vorderseite (25) und/ oder der Nachwärm- bzw. Diffusionsköper (4) an seiner Rückseite (45) abgerundet ausgebildet ist.

3. Vorrichtung nach Anspruch 1 oder 2, dadurch gekennzeichnet, daß der Nachwärm- bzw. Diffusionskörper (4) mit dem Anschmelzkörper (2), bevorzugt unter Bildung der Zuführöffnung (3) für plastifizierten Kunststoff,zumindest indirekt lösbar verbunden ist.

4. Vorrichtung nach einem der Ansprüche 1 bis 3, dadurch gekennzeichnet, daß der dem Nachwärm- bzw. Diffusionskörper (4) zugekehrte, rückseitige Rand (35) der Zuführöffnung (3) für plastifizierten Kunststoff im wesentlichen gerundet ausgebildet ist.

5. Vorrichtung nach einem der Ansprüche 1 bis 4, dadurch gekennzeichnet, daß die Kontaktfläche(n) (20, 40) des Anschmelzköpers (2) und/oder Nachwärm- bzw. Diffusionskörpers (4) mit elektrischen Heizorganen (21) erhitzbar sind.

6. Vorrichtung nach einem der Ansprüche 1 bis 5, dadurch gekennzeichnet, daß die Kontaktfläche(n) (20, 40) des Anschmelzkörpers (2) und/oder des Nachwärm- bzw. Diffusionskörpers (4) mit im wesentlichen in Vorschubrichtung (r), vorzugsweise mit zu ihr parallel, sich erstreckenden Erhebungen (23) und/oder Vertiefungen (24), vorzugsweise mit etwa wellenartiger Kontur, gebildet ist bzw. sind.

7. Vorrichtung nach einem der Ansprüche 1 bis 6, dadurch gekennzeichnet, daß die Erhebungen (23) und/oder Vertiefungen (24) der Kontaktfläche(n) (20, 40) des Anschmelzköpers (2) und des Nachwärm- bzw. Diffusionskörpers (4) quer zur Vorschubrichtung (r) gegeneinander verschoben angeordnet sind.

8. Vorrichtung nach einem der Ansprüche 1 bis 7, dadurch gekennzeichnet, daß die Erhebungen (23) der Kontaktfläche(n) (20) des Anschmelzkörpers (2) jeweils mit Vertiefungen (44) der Kontaktfläche(n) (40) des Nachwärm- bzw. Diffusionskörpers (4) - bzw. umgekehrt - fluchtend ausgebildet sind.

0223768

9. Vorrichtung nach einem der Ansprüche 1 bis 8, dadurch gekennzeichnet, daß die Kontaktfläche(n) (40) des Nachwärm- bzw. Diffusionskörpers (4) gegenüber jener bzw. jenen (20 des Anschmelzkörpers (2) abgesetzt sind.

Fig.1

Fig.2

Fig.3

0223768